(19) Europäisches Patentamt

European Patent Office

Office européen des brevets

(11) Veröffentlichungsnummer: **0 414 658 A2**

(12) **EUROPÄISCHE PATENTANMELDUNG**

(21) Anmeldenummer: **90890240.6**

(22) Anmeldetag: **09.08.90**

(51) Int. Cl.⁵: **F41J 5/10**

(30) Priorität: **25.08.89 AT 2014/89**

(43) Veröffentlichungstag der Anmeldung:
**27.02.91 Patentblatt 91/09**

(84) Benannte Vertragsstaaten:
**CH DE FR GB LI**

(71) Anmelder: **AVL Gesellschaft für**
**Verbrennungskraftmaschinen und**
**Messtechnik mbH.Prof.Dr.Dr.h.c. Hans List**
**Kleiststrasse 48**
**A-8020 Graz(AT)**

(72) Erfinder: **Tschetsch, Horst**
**Plüddemanngasse 97a**
**A-8010 Graz(AT)**
Erfinder: **Schierz, Otto, Dipl.-Ing.**
**Eckertstrasse 115a**
**A-8020 Graz(AT)**

(74) Vertreter: **Pinter, Rudolf**
**Patentanwalt Dipl.-Ing. Rudolf Pinter**
**Fasangasse 49/22**
**A-1030 Wien(AT)**

(54) **Einrichtung zur Immateriellen Trefferbildanzeige.**

(57) Bei einer Einrichtung zur immateriellen Treffer-bildanzeige sind zwei in fixer gegenseitiger Relation ausgerichtete Zeilenkameras (1, 2) vorgesehen, de-ren Aufnahmbereiche (6, 7) sich im aktiven Zielbe-reich (8) überschneiden. Die Optiken (10) der Zeilen-kameras (1, 2) sind auf mittlere bis kleine Blendenwerte, vorzugsweise ≤ 5,6, abgeblendet. Den Zei-lensensoren (14) der Zeilenkameras (1, 2) sind Rest-lichtverstärker (12) vorgeschaltet, sodaß einerseits eine auch für Großflächentargets ausreichende Schärfentiefe der Zeilenkameras (1, 2) und anderer-seits eine für eine sichere Auswertung ausreichende Lichtintensität an den Zeilensensoren (14) sicherge-stellt ist.

*Fig.2*

EP 0 414 658 A2

## EINRICHTUNG ZUR IMMATERIELLEN TREFFERBILDANZEIGE

Die Erfindung betrifft eine Einrichtung zur immateriellen Trefferbildanzeige, mit zumindest zwei in fixer gegenseitiger Relation ausgerichtet angeordneten Zeilenkameras, deren Aufnahmebereiche sich im aktiven Zielbereich überschneiden, und mit einer mit den Zeilenkameras in Verbindung stehenden Auswerteeinheit.

Derartige Anordnungen sind beispielsweise aus der DE-OS 37 05 142 bekannt und ermöglichen eine optisch-elektronische und damit verschleißfreie Registrierung von Trefferbildern von Rohrwaffen-Projektilen und dergleichen. Insbesonders vorteilhaft sind derartige, auch "optische Targets" genannte Einrichtungen bei der Anzeige bzw. Aufzeichnung von Trefferbildern schnell feuernder Waffen, die auch hinsichtlich ihrer Reihenfolge erfaßt und rasch und einfach ausgewertet werden können. Der aktive Zielbereich der Einrichtung ist durch die Überdeckung der Aufnahmebereiche beider Zeilenkameras definiert, da ja zur tatsächlichen Bestimmung der Lage eines Treffers die von den Zeilenkameras erfaßten Richtungslinien zum Durchgangspunkt des Projektils durch den jeweiligen Aufnahmebereich zum Schnitt gebracht werden müssen.

Obwohl diese optischen Einrichtungen zur immateriellen Trefferbildanzeige beispielsweise gegenüber den früher gebräuchlichen akustischen Einrichtungen - die unter Detektierung der von einem fliegenden Geschoß hervorgerufenen Druckwelle arbeiten - große Vorteile hinsichtlich universellerer Einsatzmöglichkeiten haben, gibt es doch gewisse Nachteile insbesonders im Zusammenhang mit großflächigen aktiven Zielbereichen, deren Realisierung bisher auf unüberwindliche Schwierigkeiten stieß.

Bei den akustischen Einrichtungen bzw. Verfahren, die nur sehr bedingt in der Lage sind, subsonare Projektile bzw. Geschoße zu detektieren, sind für die erforderliche Genauigkeit (größenordnungsmäßig im Bereich von 0,5 % einer Seitenlänge des aktiven Zielbereichs bzw. Targets) in den Außenbereichen großer Targets extrem aufwendige und insbesonders im Freigelände unpraktikable Anordnungen erforderlich, die davon abgesehen nach wie vor mit allen Nachteilen des akustischen Prinzips behaftet sind.

Bei den angesprochenen optisch-elektronischen Einrichtungen mit Zeilenkameras liegt die wesentliche Schwierigkeit zur Realisierung von Großflächentargets darin begründet, daß sich die Aufnahmebereiche der Zeilenkameras durch Verwendung von Weitwinkelobjektiven bzw. die Vorsehung größerer Kameraabstände zum aktiven Zielbereich zwar relativ zufriedenstellend in weiten Grenzen verbreitern lassen, daß aber einer Vergrößerung der Dimension des aktiven Zielbereiches in Richtung der optischen Achse des Objektivs der jeweiligen Zeilenkamera stets die begrenzte Schärfentiefe bei großen Blendenöffnungen entgegensteht. Trotz des Umstandes, daß bei den bekannten Einrichtungen der eingangs genannten Art stets zusätzliche starke Beleuchtungseinrichtungen verwendet werden, welche direkt oder über gegenüber den Kameras angeordnete Reflektoren zur Ausleuchtung der Aufnahmebereiche und damit zur Verbesserung des Kontrastverhältnisses an den Zeilensensoren der Zeilenkameras dienen, können die Optiken der Zeilenkameras zur an sich damit möglichen Erhöhung der Schärfentiefe nicht oder nur geringfügig abgeblendet werden, da damit unmittelbar - insbesonders bei schnell fliegenden bzw. kurzen Geschoßen, die aus Gründen des Meßtaktes bzw. der räumlichen Ausdehnung der Aufnahmebereiche in Richtung der Flugbahn keine komplette Abschattung während des Aufnahmetaktes der Zeilenkamera liefern - zu wenig Intensitätsunterschied für eine sichere Auswertung einhergeht.

Aufgabe der vorliegenden Erfindung ist es, die genannten Nachteile der bekannten Einrichtungen zu vermeiden und insbesonders eine Einrichtung zur immateriellen Trefferbildanzeige der eingangs genannten Art so auszubilden, daß mit einfachen Mitteln großflächige aktive Zielbereiche (bis zu etwa 10 x 10 m) mit Trefferbildanzeige realisiert werden können.

Dies wird gemäß der vorliegenden Erfindung dadurch erreicht, daß die Optiken der Zeilenkameras auf mittlere bis kleine Blendenwerte, vorzugsweise $\leq$ 5,6, abgeblendet sind und daß den Zeilenkameras Restlicht verstärker vorgeschaltet sind.

Die Erfindung geht somit aus von dem bereits angesprochenen Umstand, daß zur Ermöglichung genauer Messungen an Großflächentargets bzw. großflächiger aktiver Zielbereiche der Schärfentiefebereich der verwendeten Objektive erhöht werden muß. Um nun die dazu erforderliche relativ starke Abblendung der Objektive - welche gemäß bisherigem Stande der Technik von den Fachleuten immer im Hinblick auf den damit unvermeidlich einhergehenden Verlust an Beleuchtungsintensität bzw. -kontrast abgelehnt bzw. nicht in Betracht gezogen wurde - wettmachen zu können, werden den Zeilenkameras Restlichtverstärker vorgeschaltet, womit erstmals derartige Einrichtungen nicht nur in weitgehend beliebiger Größe gebaut sondern auch ausschließlich mit Umgebungslicht (Tageslicht im Freien bzw. Raumlicht in einem Schießtunnel oder dergleichen) betrieben werden können.

Nach einer besonders bevorzugten Ausgestaltung der Erfindung ist vorgesehen, daß jeder Restlichtverstärker von einem Nahfocus-Restlichtverstärker gebildet ist. Derartige Nahfocus-Bildverstärker benutzen für die Abbildung der Photoelektronen von der Photokathode auf den Leuchtschirm keinerlei elektronenoptische Hilfsmittel; die punktweise Zuordnung kommt lediglich durch die planparallele Anordnung von Photokathode und Leuchtschirm in sehr geringem Abstand und die relativ hohe angelegte Spannung zustande. Der Aufbau derartiger, an sich bekannter Restlichtverstärker ist sehr kompakt - Auflösung, Verzeichnungsfreiheit und Verstärkung sind für die Zwecke der Erfindung ausreichend hoch.

Jeder Restlichtverstärker kann in weiterer Ausbildung der Erfindung über ein zwischen seiner Ausgangsseite und dem Zeilensensor der jeweiligen Zeilenkamera angeordnetes Glasfaserbündel optisch an die Zeilenkamera angekoppelt sein, was wesentlich geringere Lichtverluste als eine Ankoppelung über eine Abbildungsoptik ermöglicht.

Die einzelnen Glasfasern eines derartigen Glasfaserbündels weisen dabei bevorzugt einen Durchmesser auf, der weniger als halb so groß wie die Abmessungen der einzelnen Pixel der Zeilensensoren der Zeilenkameras ist, womit die durch das Glasfaserbündel naturgemäß eintretenden Auflösungsverluste bedeutungslos sind. Vor jedem Restlichtverstärker, der bevorzugt einen Verstärkungsfaktor im Bereich von 100 bis 300 aufweist, kann in weiterer Ausbildung der Erfindung eine abhängig von der einfallenden Lichtintensität steuerbare Abschwächanordnung eingeschaltet sein, wodurch sichergestellt ist, daß Überbeanspruchungen und Beschädigungen durch zu große Lichtintensitäten während des Betriebes der Einrichtung ausgeschaltet werden können.

Die genannte Abschwächanordnung weist nach einem weiteren Vorschlag der Erfindung zwei kreuzbare Polarisationsfilter auf, welche, vorzugsweise über ein im Strahlengang angeordnetes Photometer und einen davon angespeisten Stellmotor, so steuerbar sind, daß die Beleuchtungsstärke an der eingangsseitigen Photokathode des Restlichtverstärkers unterhalb von 10 Lux liegt. Damit ergibt sich eine stufenlose und die Abbildung selbst nicht beeinflussende Regelungsmöglichkeit für die Intensität des tatsächlich zum Restlichtverstärker gelangenden Lichtes.

Zur weiteren Schonung der Restlichtverstärker bzw. Erhöhung von deren Lebensdauer kann nach einer bevorzugten weiteren Ausgestaltung der Erfindung, wobei vor dem aktiven Zielbereich eine, mit einer Triggereinrichtung verbundene Sensoreinrichtung zur Feststellung einer Geschoßannäherung vorgesehen ist, die Triggereinrichtung der vorzugsweise von einer Mikrowellenschranke gebildeten Sensoreinrichtung mit der Hochspannungsversorgung der Restlichtverstärker in Verbindung stehen. Damit ist die aktive Betriebszeit der Restlichtverstärker auf die für den Nachweis des Geschoßdurchganges durch den Aufnahmebereich der jeweiligen Zeilenkamera benötigte Zeit begrenzt.

Die Erfindung wird im folgenden noch anhand der in der Zeichnung schematisch dargestellten Ausführungsbeispiele näher erläutert.

Fig. 1 zeigt ein Schemabild einer erfindungsgemäßen Einrichtung;

Fig. 2 einen schematischen Schnitt durch eine Zeilenkamera zur Verwendung in einer Einrichtung nach Fig. 1; und

Fig. 3 ein schematisches Schaltbild der Einrichtung nach Fig. 1.

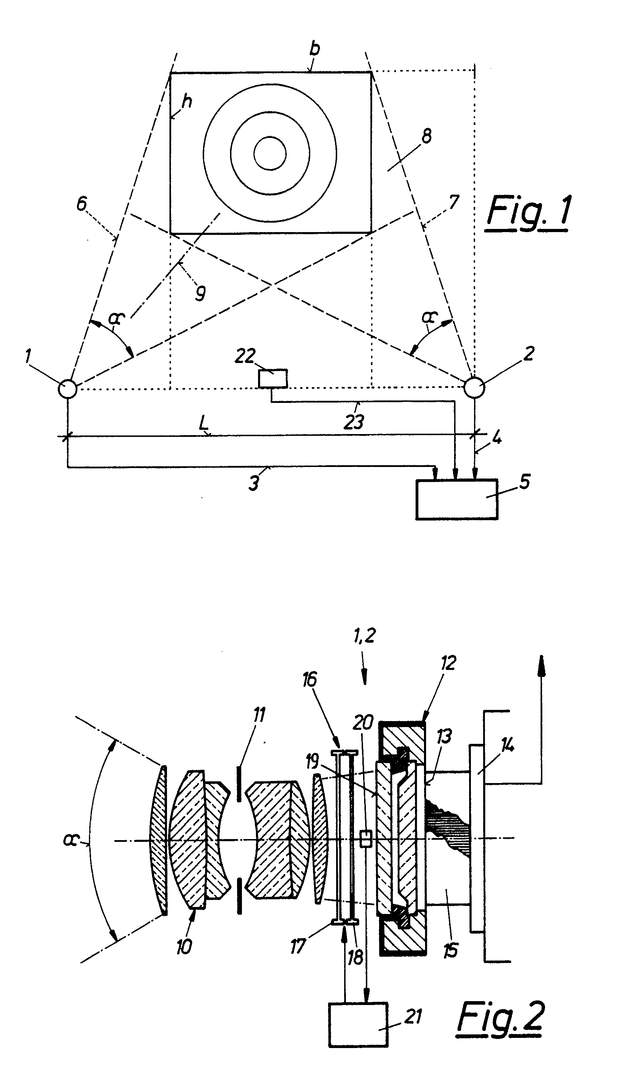

Die in Fig. 1 schematisch dargestellte Einrichtung zur immateriellen Trefferbildanzeige weist zwei in fixer gegenseitiger Relation (Basislänge L) angeordnete Zeilenkameras 1, 2 sowie eine mit diesen über Anschlüsse 3, 4 in Verbindung stehende Auswerteeinheit 5 auf. Die Zeilenkameras 1, 2 weisen Sichtwinkel $\alpha$ von etwa 60° auf und sind so angeordnet, daß sich ihre durch die Sichtwinkel $\alpha$ definierten Aufnahmebereiche 6, 7 im aktiven Zielbereich 8 überschneiden. Es sei hier erwähnt, daß die räumliche Tiefe der Aufnahmebereiche 6, 7 sehr gering ist - typisch im Bereich von etwa 1° - (abhängig von der Brennweite des verwendeten Objektives) - was durch die Breite der Pixelreihen der Zeilensensoren der Zeilenkameras 1, 2 bedingt ist, sodaß der korrekten gegenseitigen Ausrichtung der Zeilenkameras 1, 2 bzw. der zugehörigen Aufnahmebereiche 6, 7 einige Bedeutung zukommt.

Abgesehen vom Sichtwinkel $\alpha$ bzw. vom durch die Überschneidung der beiden Aufnahmebereiche 6, 7 definierten möglichen Zielbereich wird dieser natürlich noch durch die von den hier nicht dargestellten Optiken der Zeilenkameras 1, 2 begrenzte Schärfentiefe eingeengt, wobei diese Einengung in Richtung der optischen Achse des jeweiligen Objektives-bei der Zeilenkamera 1 strichpunktiert eingezeichnet und mit 9 markiert - wirksam wird. Je größer die Abblendung des jeweiligen Objektives ist, desto größer ist naturgemäß auch die auf beiden Seiten eines eingestellten Entfernungswertes nutzbare Schärfentiefe, wobei aber gleichzeitig die an den Zeilensensoren der Zeilenkameras ausnutzbare Lichtintensität entsprechend abnimmt.

Um nun trotzdem eine Vergrößerung des nutzbaren Zielbereichs bis in Bereiche von etwa 10 x 10 m (Targetbreite b x Targethöhe h) zu ermöglichen, wird bei einer beispielsweise gemäß Fig. 2 ausgestatteten Zeilenkamera 1, 2 die Optik 10 - hier ein leichtes Weitwinkelobjektiv mit einem Sichtwinkel $\alpha$, der wie erwähnt im Bereich von etwa 60° liegt - auf mittlere bis kleine Werte der Blende 11, vorzugsweise $\leq$ 5,6, abgeblendet, was eine ausreichende Schärfentiefe für den in Betracht kommenden Aufnahmeabstand ergibt; zugleich wird das an der Hinterseite der Optik austretende Licht einem Restlichtverstärker 12 zugeführt, der hier von einem Nahfocus-Restlichtverstärker gebildet ist und über ein zwischen seiner Ausgangsseite 13 und dem Zeilensensor 14 der jeweiligen Zeilenkamera angeordnetes Glasfaserbündel 15 optisch an die Zeilenkamera angekoppelt ist. Vor dem Restlichtverstärker 12 ist eine abhängig von der einfallenden Lichtintensität steuerbare Abschwächanordnung 16 in den Strahlengang eingeschaltet, welche zwei verdrehbare und damit kreuzbare Polarisationsfilter 17, 18 aufweist. Über ein im Strahlungsgang vor der Eingangsseite 19 des Restlichtverstärkers 12 angeordnetes Photometer 20 (das natürlich abseits der der Pixelreihe am Zeilensensor 14 zugeordneten Lichtwege liegt) und einen davon angespeisten Stellmotor 21 sind die Polarisationsfilter 17, 18, bzw. zumindest eines davon, so steuerbar, daß die Beleuchtungsstärke an der eingangsseitigen Photokathode des Restlichtverstärkers 12 unterhalb von etwa 10 Lux liegt.

Aus Fig. 1 ist noch zu ersehen, daß in Flugrichtung des Geschoßes vor dem aktiven Zielbereich 8 eine Sensoreinrichtung 22 zur Feststellung einer Geschoßannäherung, vorzugsweise gebildet durch eine Mikrowellenschranke oder dergleichen, angeordnet ist, welche über eine Leitung 23 hier ebenfalls mit der Auswerteeinheit 5 in Verbindung steht und dort eine Triggereinrichtung für die Hochspannungsversorgung der Restlichtverstärker auslöst, sodaß diese nur für den erforderlichen Meßzeitraum unter Hochspannung stehen.

Zum Restlichtverstärker 12 in Fig. 2 ist noch zu erwähnen, daß anstelle der dargestellten Ausführung natürlich auch jede andere bekannte, geeignete Einrichtung dieser oder ähnlicher Art verwendet werden kann. Gleiches gilt auch im Zusammenhang mit dem dargestellten Objektiv.

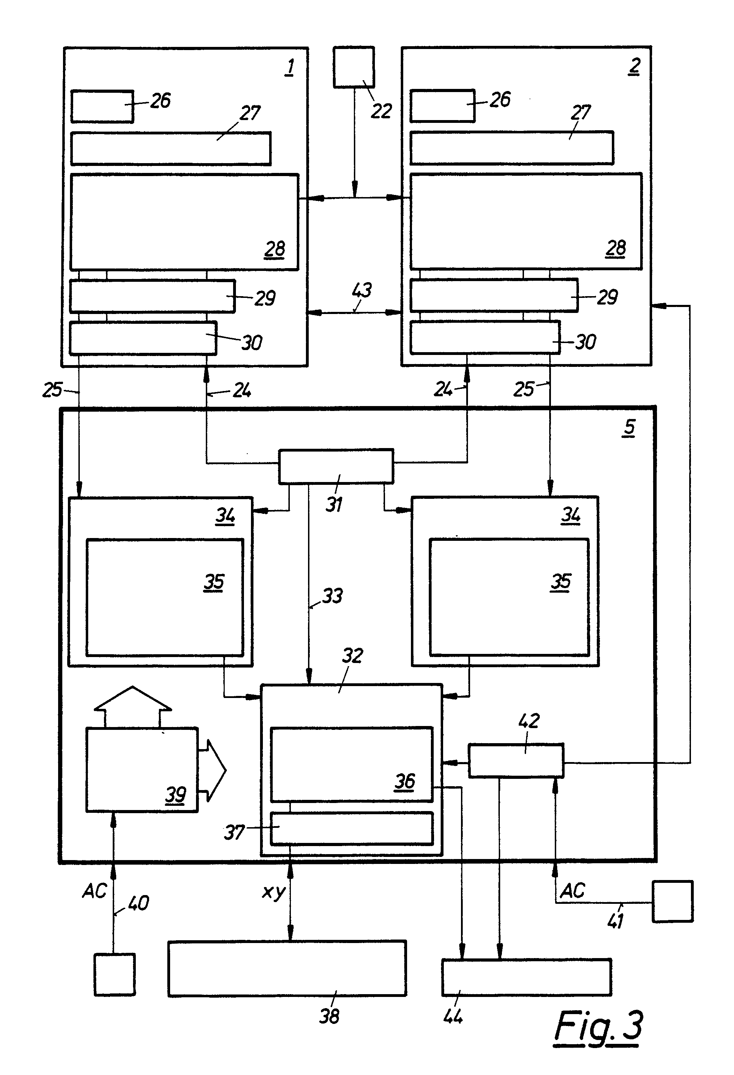

Im schematischen Schaltbild nach Fig. 3 sind mit 1 und 2 wiederum die beiden Zeilenkameras bzw. die kompletten Kameramodule bezeichnet; 5 bezeichnet wiederum die komplette Auswerteeinheit die hier über Taktleitungen 24 einerseits und Videosignal-Leitungen 25 andererseits mit den Zeilenkameras 1, 2 in Verbindung steht. Die Triggerung der Hochspannungsversorgung für die Restlichtverstärker (siehe Sensoreinrichtung 22 in Fig. 1) ist hier wiederum mit 22 angedeutet und wirkt unmittelbar auf die Zeilenkameras 1, 2 bzw. die kompletten entsprechenden Module ein. In den beiden Kameramodulen bezeichnet jeweils 26 die Optik, 27 die Belichtungssteuerung, 28 die Einheit Restlichtverstärker, Hochspannungsversorgung, Lichtleiteransatz und CCD-Zeilensensor, 29 die Kameraelektronik und 30 den Videoprozessor. In der Auswerteeinheit 5 ist mit 31 eine Timerkarte und mit 32 die Prozessorkarte bezeichnet, welche über eine Taktleitung 33 von der Timerkarte 31 angesteuert ist. Die beiden Pixellocatoren 34, die einerseits über 25 mit dem Videosignal der Kameras versorgt und andererseits mit der Timerkarte 31 in Verbindung sind, umfassen in einer Einheit 35 Delay-Einheit, Differenzierer, Komparator, Adressenzähler und FIFO. Die Prozessorkarte weist in einer mit 36 bezeichneten Baugruppe den Mikrokontroller samt EPROM und RAM auf, welche über ein Interface 37 mit der mit 38 bezeichneten Benutzeroberfläche, beispielsweise auf einem PC, in Verbindung stehen. Der Vollständigkeit halber ist hier noch auf eine Einheit 39 mit Thermostat, Kühlung und Heizung zu verweisen, die über eine Leitung 40 mit dem Wechselstromnetz in Verbindung steht. Ein weiterer Wechselstromanschluß 41 versorgt ein Netzteil 42 für die Prozessorkarte 32 bzw. für die Zeilenkamera 2 (über die Leitung 43 auch 1). Schließlich ist noch eine Kalibrieranzeige 44 vorgesehen, die mit der Einheit 36 in Verbindung steht und vom Netzteil 42 aus versorgt wird.

Während die Verbindungsleitung zwischen Prozessorkarte 32 und Benutzeroberfläche 38 sehr lange (typisch über 1 km) sein kann, wird die Kalibrieranzeige 44 über eine relativ kurze Leitung mit der Auswerteeinheit 5 verbunden, die beispielsweise in einem Splittergraben unterhalb des Targets angeordnet ist.

## Ansprüche

1. Einrichtung zur immateriellen Trefferbildanzeige, mit zumindest zwei in fixer gegenseitiger Relation ausgerichtet angeordneten Zeilenkameras, deren Aufnahmebereiche sich im aktiven Zielbereich überschneiden, und mit einer mit den Zeilenkameras in Verbindung stehenden Auswerteeinheit, **dadurch gekennzeichnet,** daß die Optiken (10) der Zeilenkameras (1, 2) auf mittlere bis kleine Blendenwerte, vorzugsweise ≤ 5,6, abgeblendet sind und daß den Zeilenkameras (1, 2) Restlichtverstärker (12) vorgeschaltet sind.

2. Einrichtung nach Anspruch 1, dadurch gekennzeichnet, daß jeder Restlichtverstärker (12) von einem Nahfocus-Restlichtverstärker gebildet ist.

3. Einrichtung nach Anspruch 1 oder 2, dadurch gekennzeichnet, daß jeder Restlichtverstärker (12) über ein zwischen seiner Ausgangsseite (13) und dem Zeilensensor (14) der jeweiligen Zeilenkamera (1, 2) angeordnetes Glasfaserbündel (15) optisch an die Zeilenkamera (1, 2) angekoppelt ist.

4. Einrichtung nach Anspruch 3, dadurch gekennzeichnet, daß die einzelnen Glasfasern einen Durchmesser aufweisen, der weniger als halb so groß wie die Abmessungen der einzelnen Pixel der Zeilensensoren (14) der Zeilenkameras (1, 2) ist.

5. Einrichtung nach einem der Ansprüche 1 bis 4, dadurch gekennzeichnet, daß vor jedem Restlichtverstärker (12) eine abhängig von der einfallenden Lichtintensität steuerbare Abschwächanordnung (16) eingeschaltet ist.

6. Einrichtung nach Anspruch 5, dadurch gekennzeichnet, daß die Abschwächanordnung (16) zwei kreuzbare Polarisationsfilter (17, 18) aufweist, welche, vorzugsweise über ein im Strahlengang angeordnetes Photometer (20) und einen davon angespeisten Stellmotor (21), so steuerbar sind, daß die Beleuchtungsstärke an der eingangsseitigen Photokathode des Restlichtverstärkers (12) unterhalb von 10 Lux liegt.

7. Einrichtung nach einem der Ansprüche 1 bis 6, wobei vor dem aktiven Zielbereich eine, mit einer Triggereinrichtung verbundene Sensoreinrichtung zur Feststellung einer Geschoßannäherung vorgesehen ist, dadurch gekennzeichnet, daß die Triggereinrichtung der vorzugsweise von einer Mikrowellenschranke gebildeten Sensoreinrichtung (22) mit der Hochspannungsversorgung der Restlichtverstärker (12) in Verbindung steht.

_Fig.1_

_Fig.2_

*Fig.3*